# EUROPEAN PATENT APPLICATION

(11) **EP 4 617 542 A1**
(43) Date of publication of application: **17.09.2025**
(21) Application number: 24163277.7
(22) Date of filing: 13.03.2024
(51) Int. Cl.: F16L 33/207, B29C 45/00

(54) **PRESS FITTING FOR A PIPE CONNECTION**

(71) Applicant: Uponor Innovation AB, 737 61 Virsbo (SE)
(72) Inventor: Tomminen, Aleksis, 15561 Nastola (FI); Hämäläinen, Janne, 15561 Nastola (FI); Holopainen, Aki, 15561 Nastola (FI); Rotso, Vesa, 15561 Nastola (FI); Kauppinen, Tuomas, 15561 Nastola (FI); Ross, Andreas, 97437 Hassfurt (DE); Dittmar, Rainer, 97437 Hassfurt (DE)
(74) Representative: Fenner, Seraina

(57) **Abstract**

Press fitting (100) for a pipe connection, comprising a fitting body (120), a press sleeve (140) comprising a substantially cylindrical press area (140) and an outward expanding first collar (144) at a first end (146) of the press sleeve (140), and a stop ring (160) interconnecting the press sleeve (140) and the fitting body (120). The stop ring (160) comprises a groove (162) for accommodating the outward expanding first collar (144) of the press sleeve (140), and a plurality of snap segments (164) formed in a first part (166) of an inner contour (168) of the stop ring (140) and delimiting the groove (162), the snap segments (164) being arranged, in an insertion direction *(aᵢₙ)* of the press sleeve (140), in front of the groove (162) to form an undercut (170), a recess angle (β) of each snap segment (164) being larger than a guiding angle (a) of the respective snap segment (164).

## Description

The present disclosure relates to a press fitting for a pipe connection, comprising a fitting body for connecting the press fitting to a pipe, a press sleeve comprising a substantially cylindrical press area, and a stop ring interconnecting the press sleeve and the fitting body.

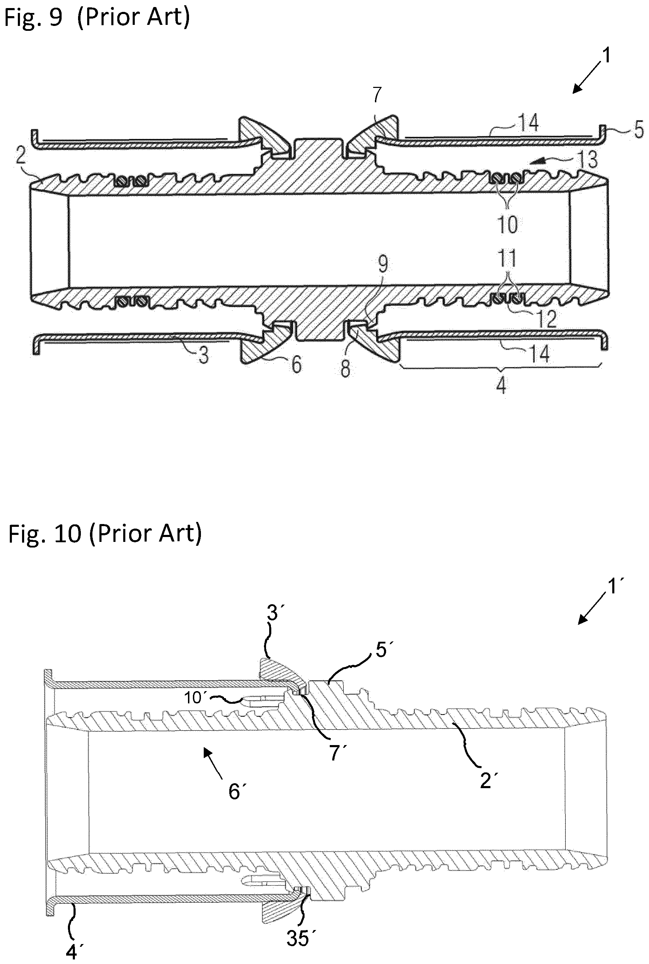

Such press fittings are generally known. For example, patent application US 2021/364111 A1 discloses a press fitting of the above type, whose cross-section is shown in Figure 9. The press sleeve 3 of the disclosed press fitting 1 comprises at least one projecting element in form of a flange 5, which delimits the substantially cylindrical press area 4 in an axial direction at its distal or open end. The press fitting 1 further comprises a banderole 14, which surrounds the substantially cylindrical press area 4 of the press sleeve 3, wherein the tubular banderole 14 is at least partially destroyed when the press sleeve 3 is pressed with a pressing tool. To ensure that the formed connection is watertight, a pressing profile 13 of a fitting body 2 comprises two recesses 10 for holding a sealing ring 11 each, which are separated by a web 12. As can be seen in Figure 9, the press sleeve 3 is attached by means of a retaining ring 6 to the fitting body 2. For this purpose, an expanded area 7 of the press sleeve 3 is inserted into a corresponding undercut formed in the retaining ring 6, and a locking lug 8 of the retaining ring 6 interlocks with a corresponding locking lug 9 of the fitting body 2.

An alternative design for a press fitting is known from patent application US 2023/0110392 A1. As disclosed therein and shown in Figure 10, the press fitting 1' comprises a fitting body 2', a press sleeve 4' arranged in a connection area 6' and a stop ring 3' fixed to the press sleeve 4' and limiting a pressing area in an axial direction of the press sleeve 4' at its proximal or fitting-side end facing an end face 35' of a central area 5' of the fitting body 2'. As shown in Figure 10, the press sleeve 4' interlocks directly with a corresponding groove 7' of the fitting body 2'. To limit the force required for pressing the press sleeve 4' onto the fitting body 2', the press sleeve 4' comprises several slots 10'.

While the known press fittings provide many advantages, the specific interconnection between the press sleeve and the fitting body may be difficult to form and may result in high forces during assembly of the fitting. For example, the insertion of the press sleeve 3 shown in Figure 9 into the corresponding undercut of the retaining ring 6 requires a relatively high assembly force and may damage the retaining ring 6. Moreover, it may be difficult to manufacture a retaining ring with an undercut deep enough to firmly hold the press sleeve 3 in place. In the alternate design shown in Figure 10, the mounting forces for attaching the press sleeve 4' directly to the fitting body 2' are also relatively high. Moreover, the provision of the slots 10 in the press sleeve 4' may require an additional manufacturing step.

Accordingly, it is a challenge to provide alternative designs for press fittings and corresponding manufacturing methods which address at least some of the above issues.

In this context, a press fitting for a pipe connection with a novel design is provided. The press fitting comprises a fitting body for connecting the press fitting to a pipe, a press sleeve comprising a substantially cylindrical press area and an outward expanding first collar at a first end of the press sleeve, and a stop ring interconnecting the press sleeve and the fitting body. The press ring comprises a groove for accommodating the outward expanding first collar of the press sleeve, a plurality of snap elements formed in a first part of an inner contour of the stop ring and a plurality of snap hooks formed in a second part of the inner contour of the stop ring. The snap segments delimit the groove and are arranged, in an insertion direction of the press sleeve, in front of the groove to form an undercut. A recess angle of each snap segment is larger than a guiding angle of the respective snap element. The snap hooks are configured to connect the stop ring to a corresponding protrusion of the fitting body.

Accordingly, an improved design for a press fitting is provided. Provision of multiple snap elements with a relatively low guiding angle and a larger recess angle reduces the assembly forces required to form a sleeve group by inserting the press sleeve into the stop ring. In combination with the outward expanding first collar, they provide a form fit connection between the first end of the press sleeve and the stop ring. Such a form-fit connection implements a strong mechanical connection between the stop ring and the press sleeve.

The improved design also enables an enhanced manufacturing method based on injection molding the stop ring. This is facilitated, at least in part, by the segmentation of the inner contour of the stop ring into separate snap elements, which simplifies removal of a core used for injection molding.

Optionally, the snap elements may have a curved, arched, bent, or slanted form in a circumferential direction. Among others, this enhances a pullout of a core during injection molding of the stop ring and/or increases the depth of the undercut, which can be realized by injection molding.

Optionally, each snap segment comprises a central part and two shoulder parts, arranged next to the central part in the circumferential direction, the central part being thicker than the shoulder parts of the respective snap segments. By using less or removing some material at the shoulder parts, at least some mechanical stress can be reduced in those areas experiencing particularly high forces during pullout of an injection core and/or during assembly of the sleeve group.

Optionally, the snap segments are separated by cutout areas arranged in the first part of the inner contour, the stop ring having a reduced wall thickness in the cutout areas compared to a wall thickness of areas, in which the snap segments are formed. The provision of cutout areas with a reduced wall thickness leads to an increased flexibility of the stop ring. This is beneficial for further reducing the forces during pullout of an injection core and/or during assembly of the sleeve group.

Optionally, the stop ring further comprises at least one measurement pad arranged in one of the cutout areas and/or within the groove. The measurement pad is configured for determining a diameter of the groove. Such measurement pads simplify the dimensional check of the groove, which may not be measured directly by a conventional measurement machine.

Optionally, the stop ring further comprises multiple stop ribs arranged at the inner contour of the stop ring, in particular in a second part of the inner contour. The stop ribs limit an insertion depth of the press sleeve in the insertion direction. This enables, amongst others, to position a press sleeve at a well-defined position with respect to the stop ring.

Optionally, the stop ring further comprises a plurality of snap hooks formed in a second part of the inner contour of the stop ring, the snap hooks being configured to connect the stop ring to a corresponding protrusion of the fitting body. The provision of multiple snap hooks reduces the assembly forces required to place a preassembled sleeve group onto the fitting body. In combination with the protrusion of the fitting body, they provide a snap fit connection between the stop ring and the fitting body.

Optionally, the snap hooks comprise a centering step for positioning the stop ring on the fitting body. Accordingly, the preassembled sleeve group can be attached to the fitting body in a coaxial manner at a well-defined position.

Optionally, the stop ring comprises at least one hollow injection pocket. The provision of one or more injection pockets reduces a shearing of material, in particular plastic material, during production. Accordingly, it further reduces mechanical stress during the manufacturing process.

Optionally, the at least one hollow injection pocket is formed within a drop shaped projection formed on an outside contour of the stop ring, in particular in a part of the outside contour corresponding in the circumferential direction to a snap hook formed in a second part of the inner contour. The drop shaped projection increases both the stability and flexibility of the stop ring, for example in the area of a respective snap hook.

Optionally, the stop ring comprises a chamfer on an outside edge of the stop ring facing the press sleeve. This improves the ability of the stop ring to expand when a core is pulled out after injection molding and when the press sleeve is pressed into the stop ring.

Optionally, the guiding angle of the snap element lies in the range of 15 to 25° and/or the recess angle of the snap elements lies in the range of 35 to 45°. The selection of the above angles limits the injection forces during assembly of the sleeve group. At the same time, the much steeper, for example two to three times steeper, recess angles with respect to the guiding angles, result in a high pullout force required to separate the press sleeve from the stop ring, thereby holding the sleeve group firmly together.

Optionally, the depth of the undercut lies in the range of 0.25 to 0.45 mm, in particular for a press fitting for a pipe having a diameter of 16 or 32 mm. An undercut of a corresponding depth can be obtained by injection molding using the above design features of the disclosed stop ring. It enables a form fit connection between the stop ring and the press sleeve of the sleeve group.

Optionally, the outward expanding first collar of the press sleeve has a guiding angle in the range of 10 to 35° (or a guiding angle in the range of 15 to 30° with the error range of +/-5°). A guiding angle in this range results in a good compromise between acceptable insertion forces and good interlocking between the press sleeve and the stop ring.

Optionally, a terminal end of the outward expanding first collar is sharp without any chamfer. Such a sharp end provides a good interlocking of the collar in the groove behind the undercut.

Optionally, a radius of a kink or bend between the substantially cylindrical press area and the outward expanding first collar lies in the range of 1.0 to 1.5 mm. Such a relatively narrow radius results in a good interlocking between the press sleeve and the stop ring.

Optionally, the press sleeve further comprises at least one of an inspection window and a punch mark formed in the substantially cylindrical press area. Provision of an inspection window enables a visual inspection of the insertion of a pipe into the press fitting. Provision of a punch mark formed in the substantially cylindrical press area enables a pipe, which is inserted into the press fitting, to be held in place until the press sleeve is actually pressed to form a permanent connection.

Optionally, the press sleeve further comprises an outward expanding second collar, in particular a flange, formed at a second end of the press sleeve. Provision of a second collar enables a pressing jaw of a tool for pressing the press sleeve to be guided.

Optionally, the stop ring is made from a plastic material, in particular a thermoplastic material such as polyoxymethylene (POM), and is formed by injection molding.

Optionally, the press sleeve is made from a metal material, in particular stainless steel, and is formed by deep drawing.

Optionally, the fitting body is made from a metal or plastic material, in particular brass or polyphenylsulfone (PPSU), and is formed by turning or molding, respectively.

Further details and advantages of the disclosed press fitting, its components, such as the stop ring or the preassembled sleeve group, and its manufacturing, are disclosed in the following description of exemplary embodiments as well as the attached set of claims.

Specific embodiments are described with respect to attached set of figures, wherein the same reference signs are used to identify the same or similar components of different embodiments for easier reference.
Figures 1A to 1C show various views of an assembled press fitting according to the present disclosure.
Figures 2A to 2C show various views of a sleeve group during and after its assembly.
Figures 3A and 3B show different views of a press sleeve.
Figures 4A to 4D show various views of a stop ring.
Figure 5 shows a detail of a stop ring comprising an injection pocket.
Figures 6A and 6B show cross-sections through a stop ring during insertion of a press sleeve.
Figures 7A and 7B show an FEM analysis of forces acting during assembly and pullout of a press sleeve into the stop ring.
Figure 8 shows, in a schematic manner, a method for manufacturing a press fitting.
Figures 9 and 10 show two different press fittings according to the prior art.

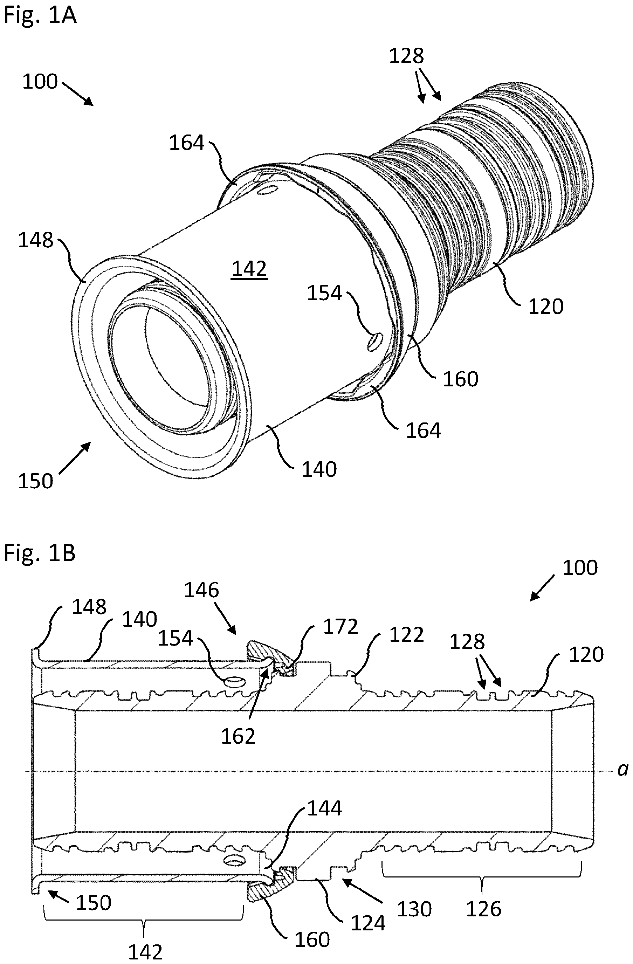

Figures 1A to 1C show a press fitting 100 according to the present disclosure in its assembled state. As can be seen, the press fitting 100 comprises three main components, namely a fitting body 120, a press sleeve 140 and a so-called retaining or stop ring 160.

As best shown in the cross-section of Figure 1B, the exemplary fitting body 120 comprises a central area 124, separating two connection areas at respective ends of the press fitting 100. At each side of the fitting body 120, a sleeve group may be attached. Each sleeve group comprises a press sleeve 140, which has a cylindrical press area 142, and a stop ring 160.

For better understanding, only a single sleeve group with a single press sleeve 140 and a single stop ring 160 is shown in Figures 1A to 1C. In general, however, one press sleeve 140 and one stop ring 160 is provided for each connection area of a fitting body. In the specific embodiment shown in the figures, the fitting body 120 is configured to connect two pipes to each other in a straight line or axial direction a, indicated by the dashed line. Of course, the disclosed fitting design is also applicable to other types of fitting bodies, such as angular or U-shaped connectors, and/or multiway fittings, such as T-fittings or manifolds.

The fitting body 120 comprises, for each sleeve group, a circumferential groove 130 for attaching a corresponding stop ring 160. In the depicted example, the grooves 130 are limited in the axial direction a by the central area 124 and a corresponding protrusion 122 of the fitting body 122.

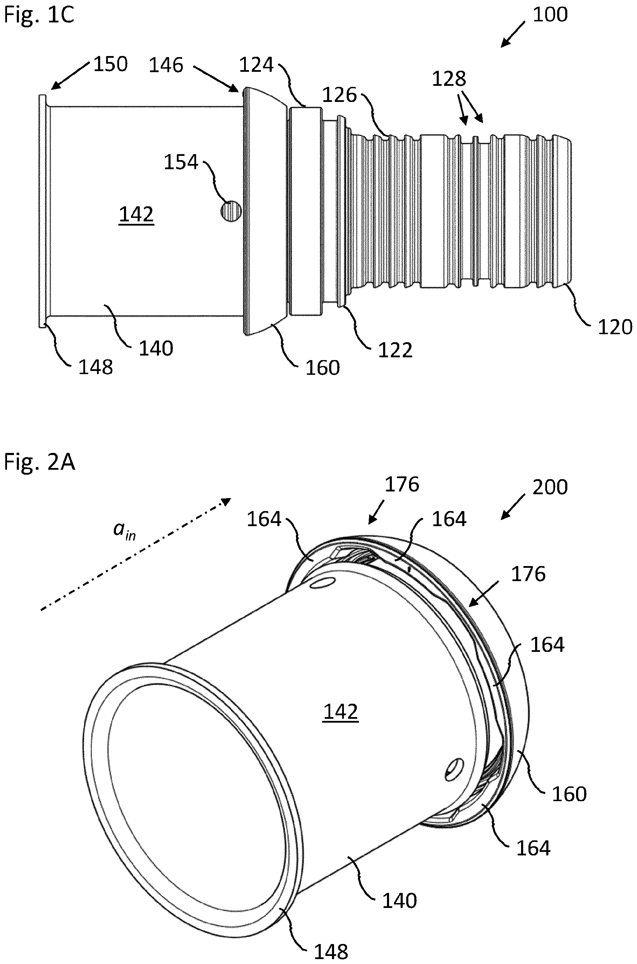

As also shown in Figures 1B and 1C, the fitting body 120 further comprises various other protrusions and/or grooves forming a pressing profile 126 as generally known from the art. In the exemplary pressing profile 126, two recesses 128 are provided, which may accommodate corresponding sealing rings (not shown).

As best seen in Figure 1B, the press sleeve 140 is held at its proximal or first end 146 by the stop ring 160. For this purpose, the first end 146 of the press sleeve 140 is widened, for example during a deep drawing process of the press sleeve 140, to form an outward expanding collar 144. As best seen in Figure 1A, the collar 144 is positioned in a groove 162 and is held by multiple snap segments 164 of the stop ring 160, which delimit the groove 162 towards its distal opening. In the described example, six equal size snap segments 164 are provided along the inner contour of the stop ring 140. However, the number of snap segments 164 is not limited by the present disclosure, and may, for example, lie in the range of 2 to 12, depending on the size of the stop ring 160.

As explained in more detail later, the described stop ring 160 further comprises several snap hooks 172, which interlock with the groove 130 of the fitting body 120 to form a snap fit connection. Accordingly, the press sleeve 140 is attached indirectly to the fitting body 120 by means of the stop ring 160. Similar to the above, six equal size snap hooks 172 are provided along the inner contour of the stop ring 140. However, the number of snap hooks 172 is not limited by the present disclosure, and may, for example, lie in the range of 2 to 12, depending on the size of the stop ring 160. Alternatively, other connection means may be provided, such as locking lugs as described with respect to Figure 9.

Figures 1A to 1C show various further, optional details of the disclosed fitting 100. For example, it shows that the press sleeve 140 comprises several inspection windows 154 in the press area 142. Moreover, the press sleeve 140 also comprises a second collar in the form of a flange 148 at a distal, second end 150 of the press sleeve 140. Together, the flange 148 and the stop ring 160 limit the press area 142 in both directions and may help to position, alone or in combination, a pressing tool (not shown) in the press area 142.

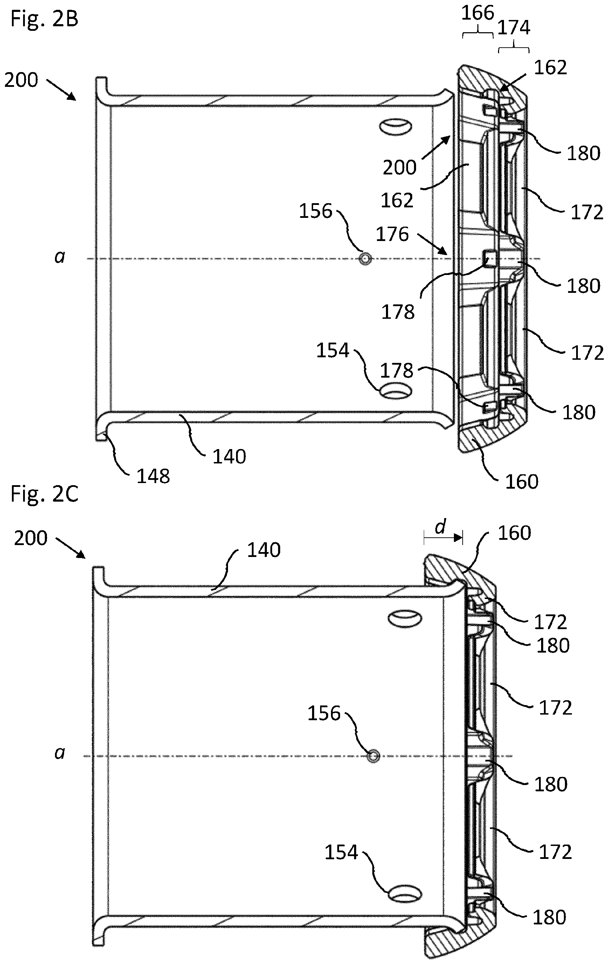

Figures 2A to 2C show a corresponding sleeve group 200 during assembly. In particular, in Figures 2A and 2B, the press sleeve 140 has not been inserted into the stop ring 160. In contrast, Figure 2C shows a cross-section through the sleeve group 200 once the press sleeve 140 has been pushed into the stop ring 160.

As can be seen in Figures 2A and 2B, the snap elements 164 of the stop ring 160 are separated by cutout areas 176 having a reduced wall thickness. The combination of multiple snap elements 164 and intermediate cutout areas 176 result in a higher flexibility of the stop ring 160 during manufacturing and during assembly of the sleeve group 200. Accordingly, the stop ring 160 can be deformed to allow the snap elements 164 to glide over the collar 144 of the press sleeve 144 during insertion in an insertion direction *aᵢₙ.*

As can be best seen in Figure 2B, an inner contour 168 of the stop ring 160 can be divided in a first part 166 for accommodating the first end 146 of the press sleeve 140 and a second part 174 for attaching the stop ring 160 to the fitting body 120. These two parts 166 and 174 are separated by the groove 162 accommodating the first collar 144.

As can also be seen in Figure 2B, measurement pads 178 are arranged in the cutout areas 176, which enable the dimension of the groove 162 to be verified. In the described embodiment, the measurement pads 178 are machined at the same diameter as the groove 162 on a core used for injection molding of the stop ring 160. Then the other details of the inner contour 168 of the stop ring 160 will be eroded on the core. The purpose of the measurement pads 178 is mainly to measure the groove diameter representatively because the diameter of the groove 162 cannot be readily measured itself with common measurement machines.

Moreover, in an extension of the cutout areas 176 in the second part 174, corresponding stop ribs 180 are provided, which limit an insertion depth d of the press sleeve 140 inside the stop 160 as shown in Figure 2C.

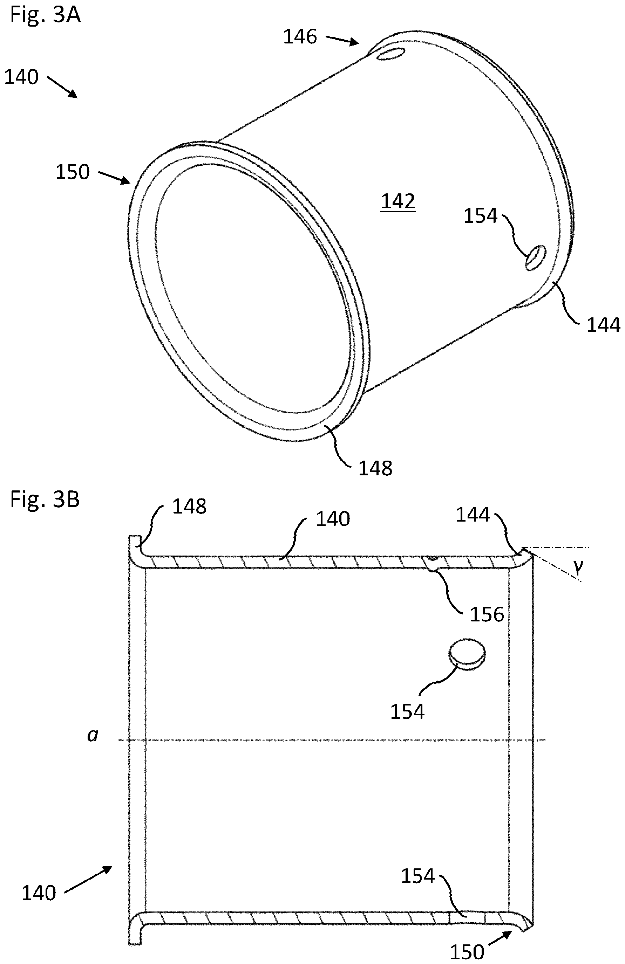

Figures 3A and 3B show different views of the press sleeve 140 in isolation. They show, amongst others, the outward expanding first collar 144 arranged at the proximal or first end 146 and the second collar in the form of a flange 148 ring arranged at the distal or second end 150.

As described before, the press sleeve 140 comprises one or more inspection windows 154, which enable an installer to visually verify whether a pipe has been fully inserted into the press sleeve 140 of the sleeve group 200. Moreover, the cross-section of Figure 3B shows that at least one punch mark 156 has been formed by a corresponding punch tool in the pressing area 142. This punch mark 156 protruding on the inside surface of the press sleeve 140 helps to hold a pipe pushed into the press fitting 100 prior to the pressing of the press sleeve 140 with the corresponding press tool (not shown).

Figure 3B also shows some geometric details of the first and second collars 144 and 148. For example, it shows that the first collar 144 has a guiding angle γ of approximately 30°. Depending on the diameter of the pipe, and other parameters of the press fitting 100, the guiding angle γ may vary between 15 to 30° and may have a tolerance of 5°. In a transition area between the first collar 144 and the pressing area 142, a material of the press sleeve 140, in particular stainless steel, is bent to form a relatively narrow kink 152. In the described example, a bending radius at the area of the kink 142 lies in the range of 1.0 to 1.5 mm.

Further attention is drawn to the fact that the first collar 144 has a sharp end, produced, for example, by a cutting of a metal material used for deep drawing the press sleeve 140. In particular, the first collar 144 does not have any chamfer. Provision of such a relatively sharp end of the first collar 144 improves the interlocking between the press sleeve 140 and the stop ring 160 as shown in Figure 2C.

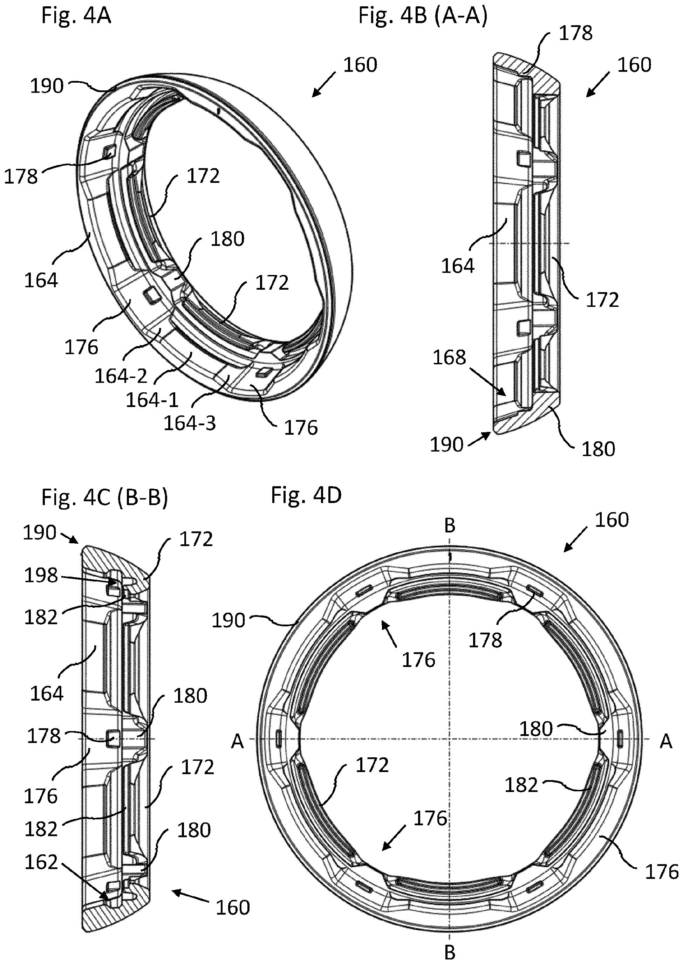

Figures 4A to 4D show various details of an improved stop ring 160. Among others, Figure 4A shows that each snap element 164 comprises a central part 164-1 and two shoulder parts 164-2 and 164-3 left and right of the central part 164-1 in a circumferential direction of the stop ring 160. In the depicted embodiment, the shoulder parts 164-2 and 164-3 are formed as ramps interconnecting the central part 164-1 having a first, thicker wall thickness with a neighboring cutout area 176 having a second, thinner wall thickness. However, other shapes of the snap element 164, such as curved, arched, or bent shapes, are also possible. The provision of a reduced amount of material in the shoulder parts 164-2 and 164-3 compared to the central part 164-1 leads to reduced stress in these parts during removal of a core during injection molding of the stop ring 160 and during insertion of the press sleeve 140 into the stop ring 160.

Figures 4A to 4D, in particular the cross section along axis A-A of Figure 4B, also show that the stop ring 160 has a chamfer 190 on its outside edge of the face oriented, in a mounted position, towards the press sleeve 140. This facilitates that the stop ring 160 can expand slightly, when a core is pulled out after injection molding. In the described embodiment, the chamfer 190 has an angle of 45° relative to the otherwise flat surface of the stop ring 160.

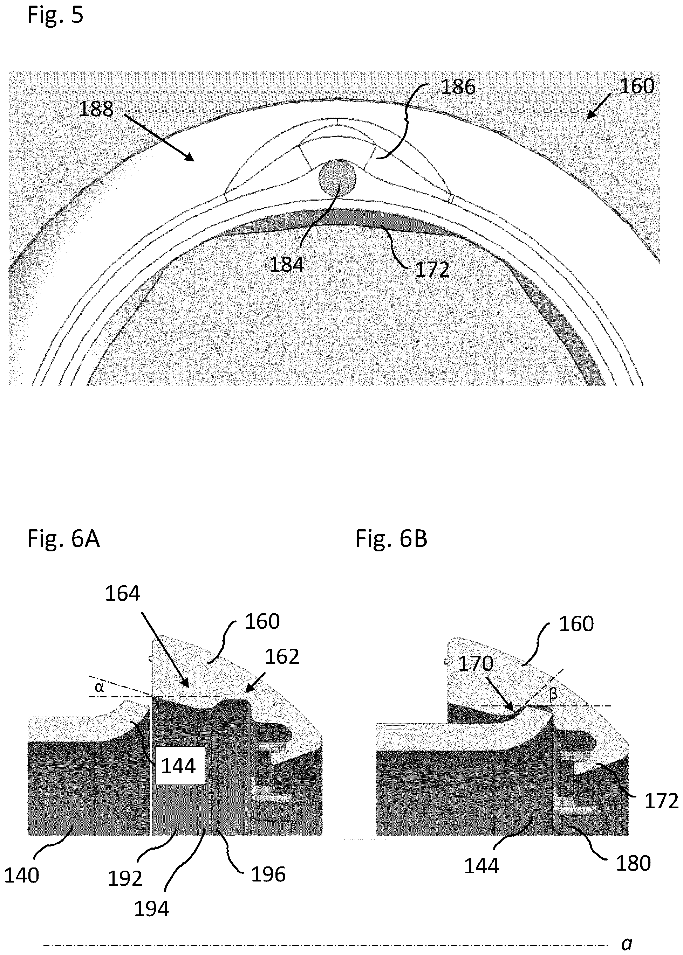

Figures 4A to 4D also show further details of the snap hooks 172. As best seen in the cross-section along axis B-B of Figure 4C, the material of each snap hook 172 forms a hook around a groove or depression 198 extending in the insertion direction *aᵢₙ,* i.e., orthogonal to the groove 162 for accommodating the first collar 144 of the press sleeve 140. The depression 198 increases the flexibility of the snap hooks 172. Moreover, each snap hook 172 ends in a centering step 182, which positions the snap hook 172 on the protrusion 122 of the fitting body 120 as shown in Figure 1B. In a relaxed position as shown in Figures 6A and 6B, a leading surface of each snap hook 172 may have a relatively low guiding angle of about 15 to 40°, which will result in a relatively low snap-on force for attaching the stop ring 160 to the fitting body 120.

The figures also show in further detail the configuration of the measurement pads 178, which extend, in the axial direction a, over the diameter of the groove 162, as best seen in Figure 4C.

Figure 4D shows that the stop ribs 180 extend over the back wall the groove 162 towards the center of the stop ring 160. In the described configuration, the stop ring 160 has six snap elements, separated by six cutout areas 176, both arranged in the first part 166 of the inner contour 168. In addition, the stop ring has six snap hooks 172 separated by six stop ribs 180, both arranged in the second part 174 of the inner contour 168. Moreover, the stop ring 160 has six measurement pads 182 formed in the groove 162 between the first part 166 and the second part 174. In the described configuration, the snap elements 164 and the snap hooks are aligned with each other along the circumference and extend roughly over the same segment of the contour. Similar, the cutout areas 176, the measurement pads 178 and the stop ribs 180 are also aligned with each other along the circumference. However, in other embodiments, this does not need to be the case, in particular in case a different number of snap elements 176 and snap hooks 172 is provided.

Figure 5 shows a further, optional feature of the stop ring 160 as seen from its back or proximal side facing the central area 124 of the fitting body 120. In the area of each snap hook 172, a hollow injection pocket 184 is provided. As can be seen in the figure, the injection pocket 184 is provided in a part of the stop ring 160, which is formed by providing teardrop-shaped projections 186 at an outer contour 188 of the stop ring 160. The provision of the teardrop-shaped injection pockets 184 reduces the shearing of plastic material during the production of the stop ring 160 using injection molding.

Figures 6A and 6B show a cross-section through a part of the stop ring 160 during insertion of the first collar 144 of the press sleeve 140.

As can be seen best in Figure 6A, on insertion, the leading edge of the first collar 144 hits a first surface 192 of the snap elements 164, which has a relatively low guiding angle α with respect to the axial direction a. It then slips over a horizontal, second surface 194 forming the highest part of the snap element 164 before it snaps in behind a third surface 196, which connects the second surface 194 with the bottom of the groove 162. The third surface 196 has a recess angle β that is steeper than the guiding angle α.

In the described example, the guiding angle α lies in the range of 15 to 25°, and the recess angle β lies in the range of 35 to 45°. The depth of an undercut 170 formed by the snap element 146 with respect to the groove 162 lies in the range of 0.25 to 0.5 mm for the described stop ring 160. In general, the depth of the undercut 170 depends on the diameter of the stop ring 160.

As can be seen in Figure 6B, the relatively strongly outward bent first collar 144 with its sharp edge interlocks behind the undercut 170 formed by the snap elements 164 with respect to the groove 162. Accordingly, a force required to pull out the press sleeve 140 from the stop ring 160 is relatively high, and, in particular higher than the force required to insert the press sleeve 140 into the stop ring 160.

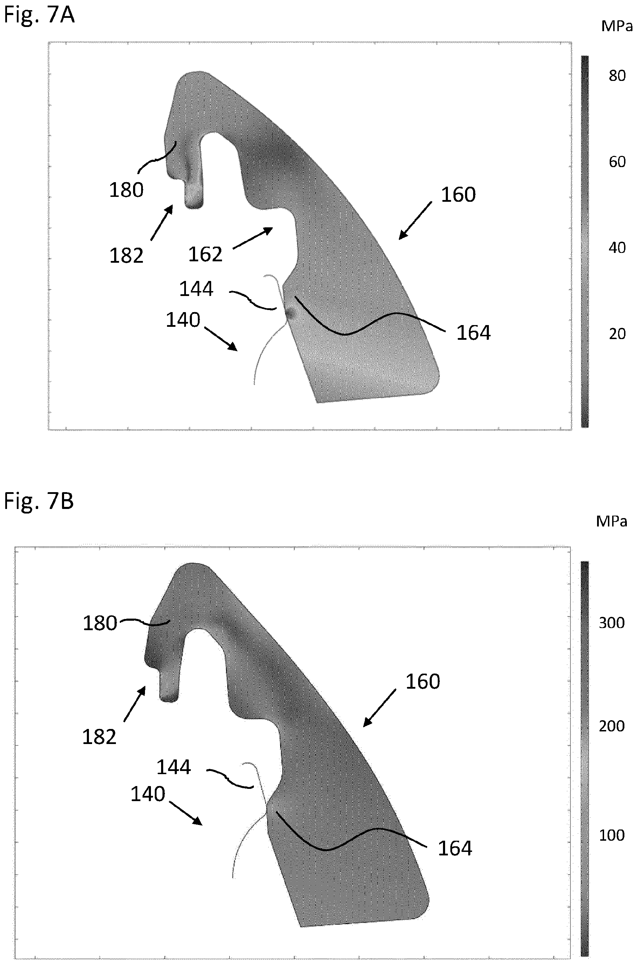

Figures 7A and 7B show the van Mises stress values (indicated in MPa according to the scale on the right) encountered during insertion (Figure 7A - Peak In) and removal (Figure 7B - Peak Out) of the press sleeve 140 with respect to the stop ring 160 during assembly and disassembly of the sleeve group 200, respectively. As can be seen in the figures, the van Mises stress values during insertion are much lower than during pullout.

For example, for a sleeve group 200 for a pipe having a (nominal or outer) diameter of 16 mm, an assembly force is about 92 newtons, whereas the pullout force is about 204 N for an undercut 170 having a depth of 0.25 mm. For a sleeve group 200 for a pipe diameter of 32 mm, the assembly force is about 177 N with a corresponding pullout force of 272 N for an undercut of 0.35 mm. The above measurement results correspond well with values derived from the FEM analysis and confirm that the pullout force is typically about 50% to 300% higher than the corresponding assembly force, thus providing a firm form fit connection between the press sleeve 140 and the stop ring 160 while facilitating a relatively easy insertion of the press sleeve 160 during preassembly of the sleeve group 200.

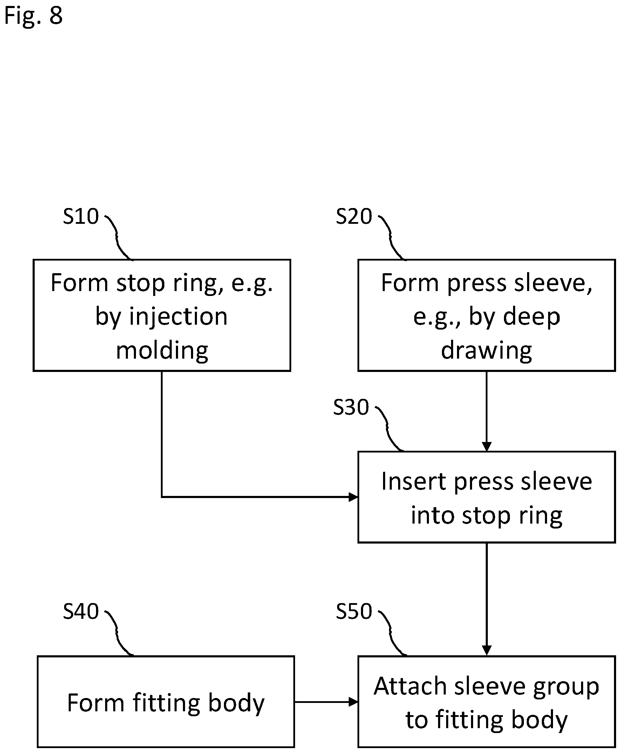

Figure 8 shows, in a schematic manner, a flowchart of a method for manufacturing a press fitting, such as the press fitting 100 described before.

As shown in Figure 8, a stop ring is formed in a step S10 as a separate part, for example by injection molding. For example, a thermoplastic material such as Polyoxymethylene (POM) can be injected into a mold comprising an outer form and a core. The core has a surface corresponding to a negative imprint of the inner contour 168 as described before. The outer form has a surface corresponding to a negative of the outer contour 188 of the stop ring 180. After injecting the thermoplastic material, the core can be removed from the mold and, thereafter, the finished stop ring 160 can be pulled out from the mold.

In a step S20, the press sleeve 140 is formed. For example, it may be formed by deep drawing a sheet of stainless steel into an essentially cylindrical shape. The collars 144 and/or 148 may be formed as a part of the deep drawing process, or may be formed later, for example by a widening procedure. Furthermore, after deep drawing of the cylinder shape, one end of the press sleeve 140 may be opened, for example by cutting. Alternatively, the metal press sleeve 140 could also be produced by machining, like a turning process. Optionally, one or more inspection windows 154 and/or one or more punch marks 156 may be formed by stamping or punching in an optional manufacturing step.

Thereafter, in a step S30, the press sleeve 140 is inserted with its first end 146 into the inner contour 168 of the stop ring 160 (or vice versa) to from the sleeve group 200.

In a step S40, the fitting body 120 is formed. This may be performed in any appropriate manner as known from the prior art, for example by turning a brass cylinder or by molding a plastic material to form the fitting body 120.

In a last step S50, the sleeve group 200 is attached to the fitting body 120, by pushing the proximal end of the sleeve group 200 over one end of the fitting body 120, until the snap hooks 172 of the stop ring 160 snap into a corresponding groove 130 of the fitting body 120.

The present invention has been described above with respect to various embodiments as shown in the attached figures. Nonetheless, attention is drawn to the fact that the protective scope is not limited by the specific embodiments disclosed therein and is defined by the attached set of claims.

### List of references

- 100: press fitting
- 120: fitting body
- 122: protrusion
- 124: central area
- 126: pressing profile
- 128: recess
- 130: groove (of the fitting body)
- 140: press sleeve
- 142: press area
- 144: first collar
- 146: first end
- 148: flange (second collar)
- 150: second end
- 152: kink
- 154: inspection window
- 156: punch mark
- 160: stop ring
- 162: groove (of the stop ring)
- 164: snap element
- 166: first part
- 168: inner contour
- 170: undercut
- 172: snap hook
- 174: second part
- 176: cutout area
- 178: measurement pad
- 180: stop rib
- 182: centering step
- 184: injection pocket
- 186: projection
- 188: outer contour
- 190: chamfer
- 192: first surface
- 194: second surface
- 196: third surface
- 198: depression
- 200: sleeve group

- S10 to S50: manufacturing steps

## Claims

1. A press fitting (100) for a pipe connection, comprising:
- a fitting body (120) for connecting the press fitting (100) to a pipe;
- a press sleeve (140) comprising a substantially cylindrical press area (142) and an outward expanding first collar (144) at a first end (146) of the press sleeve (140); and
- a stop ring (160) interconnecting the press sleeve (140) and the fitting body (120), the stop ring (160) comprising:
- a groove (162) for accommodating the outward expanding first collar (144) of the press sleeve (140); and
- a plurality of snap segments (164) formed in a first part (166) of an inner contour (168) of the stop ring (140) and delimiting the groove (162), the snap segments (164) being arranged, in an insertion direction (*aᵢₙ*) of the press sleeve (140), in front of the groove (162) to form an undercut (170), a recess angle (β) of each snap segment (164) being larger than a guiding angle (α) of the respective snap segment (164).

2. The press fitting (100) according to claim 1, wherein at least one of:
- the snap segments (164) have a curved, arched, bent, or slanted form in the circumferential direction; and
- each snap segment (164) comprises a central part (164-1) and two shoulder parts (164-2, 164-3), arranged next to the central part (164-1) in the circumferential direction, the central part (164-1) being thicker than the shoulder parts (164-2, 164-3) of the respective snap segment (164).

3. The press fitting (100) according to claim 1 or 2, wherein the snap segments (164) are separated by cut-out areas (176) arranged in the first part of the inner contour (168), the stop ring (160) having a reduced wall-thickness in the cut-out areas (176) compared to a wall thickness of areas, in which the snap segments (164) are formed.

4. The press fitting (100) according to any one of claims 1 to 3, wherein the stop ring (160) further comprises multiple stop ribs (180) arranged at the inner contour (168) of the stop ring (160), in particular in a second part (174) of the inner contour (168), the stop ribs (180) limiting an insertion depth of the press sleeve (140) in the insertion direction (*aᵢₙ*)*.*

5. The press fitting (100) according to any one of claims 1 to 4, wherein the stop ring (160) further comprises a plurality of snap hooks (172) formed in a second part (174) of the inner contour (168) of the stop ring (160), the snap hooks (172) being configured to connect the stop ring (140) to a corresponding protrusion (122) of the fitting body (120) .

6. The press fitting (100) according to claim 5, wherein the snap hooks (172) comprise a centering step (182) for positioning the stop ring (160) on the fitting body (120).

7. The press fitting (100) according to any one of claims 1 to 6, wherein the stop ring (160) comprises at least one hollow injection pocket (184).

8. The press fitting (100) according to any claim 7, wherein the at least one hollow injection pocket (184) is formed within a drop shaped projection (186) formed on an outside contour (188) of the stop ring (160), in particular in a part of the outside contour (188) corresponding in the circumferential direction to a snap hook (172) formed in a second part (174) of the inner contour (168).

9. The press fitting (100) according to any one of claims 1 to 8, wherein the stop ring (160) comprises a chamfer (190) on an outside edge of the stop ring (160) facing the press sleeve (140).

10. The press fitting (100) according to any one of claims 1 to 9, wherein at least one of:
- the guiding angles (α) of the snap elements (164) lies in the range of 15-25°;
- the recess angle (β) of the snap elements (164) lies in the range of 35-45°; and
- the depth of the undercut (170) lies in the range of 0.25 to 0.45 mm.

11. The press fitting (100) according to any one of claims 1 to 10, wherein at least one of:
- the outward expanding first collar (144) of the press sleeve (140) has a guiding angle (γ) in the range of 10-35°;
- a terminal end (150) of the outward expanding first collar (144) is sharp without any chamfer; and
- a radius of a kink (152) or bend between the substantially cylindrical press area (142) and the outward expanding first collar (144) lies in the range of 1.0 - 1.5mm.

12. The press fitting (100) according to any one of claims 1 to 11, wherein the press sleeve (140) further comprises at least one of:
- an inspection window (154) formed in the substantially cylindrical press area (142) and configured for visually inspecting the insertion of a pipe into the press-fitting (100);
- a punch mark (156) formed in the substantially cylindrical press area (142) and configured for fixing a pipe inserted into the press-fitting (100) prior to pressing the press sleeve (140); and
- an outward expanding second collar, in particular a flange (148), formed at a second end (150) of the press sleeve (140), the second collar (148) being configured for guiding a pressing jaw of a tool for pressing the press sleeve (140).

13. The press fitting (100) according to any one of claims 1 to 12, wherein the stop ring (160) is made from a plastic material, in particular polyoxymethylene, POM, or another thermoplastic material, and is formed by injection molding.

14. The press fitting (100) according to any one of claims 1 to 13, wherein the press sleeve (140) is made from a metal material, in particular stainless steel, and is formed by deep drawing.

15. The press fitting (100) according to any one of claims 1 to 13, wherein the fitting body (120) is made from a metal or plastic material, in particular brass or polyphenylsulfone, PPSU, and is formed by turning or molding, respectively.
